# EUROPEAN PATENT SPECIFICATION

(11) **EP 1 425 245 B1**
(45) Date of publication and mention of the grant of the patent: **30.06.2010**
(21) Application number: 02779264.7
(22) Date of filing: 13.08.2002
(51) Int. Cl.: C01G 19/02, C01G 25/02, C01G 30/00, C01G 49/06, C07F 9/38, C07F 9/46, C07F 9/50, C07F 9/53, C01B 25/163

(54) **METHOD FOR PREPARING STABLE DISPERSIONS OF METALLIC NANOPARTICLES, STABLE DISPERSIONS OBTAINED THEREFROM AND COATING COMPOSITIONS CONTAINING THEM**
VERFAHREN ZUR HERSTELLUNG STABILER DISPERSIONEN METALLISCHER NANOPARTIKEL, STABILE DISPERSION HERGESTELLT AUF BASIS DIESES VERFAHRENS UND BESCHICHTUNGSZUSAMMENSETZUNGEN ENTHALTEND DIESE DISPERSIONEN
PREPARATION DE DISPERSIONS STABLES DE NANOPARTICULES METALLIQUES, DISPERSIONS STABLES AINSI OBTENUES ET COMPOSITIONS DE REVETEMENT RENFERMANT CES DISPERSIONS

(30) Priority: 16.08.2001 US 312721 P
(43) Date of publication of application: 09.06.2004
(73) Proprietor: ESSILOR INTERNATIONAL COMPAGNIE GENERALE D'OPTIQUE, 94227 Charenton cédex (FR)
(72) Inventor: DE LEUZE-JALLOULI, Agnès M., LARGO, FL 33774 (US); FOURNAND, Gérald, TAMPA, FL 33626 (US); BITEAU, John, F-94100 SAINT-MAUR-DES FOSSES (FR)
(74) Representative: Catherine, Alain
(86) International application number: PCT/EP2002/009164
(87) International publication number: WO 2003/016217

(56) References cited:
- US-A- 6 054 495
- US-B1- 6 183 658

## Description

### Field of the invention

This invention relates to a method for obtaining stabilized liquid dispersions of nanoparticles from nanoparticles powders or non - stabilized liquid dispersions thereof and coating compositions comprising such stabilized nanoparticles dispersions.

### Background of the invention

The dispersion in a liquid of nanoparticles obtained in a powder form is a technical problem difficult to solve as aggregation will occur in the solid phase and it is difficult to break those after their formation. Moreover, when the nanoparticles are dispersed, another issue is then to keep them dispersed over a long period of time (at least one week, and preferably at least one month). The introduction of this dispersion into a coating formulation or a mixture of organic compound can be another problem. The change of media can result into a destabilization of the dispersion and an aggregation of the nanoparticles. Recent examples in the literature have dealt with this subject, for examples US 5,993,967, US 6,033,781, WO 97/38041 (Brotzman), US 6,183,658 (Schmidt).

In the Brotzman patents, the nanoparticles are dispersed first in a solvent with a high shear mixer, then a star-graft silicone polymer is added. This polymer will coat the surface of the nanoparticles to prevent any agglomeration to occur. In their process, 7.3 weight % of polymer relative to the weight of nanopowder is added. This reaction is done in a fairly dispersed media with 17.9 w% of solid compared to the total weight of the solution. This low concentration will help avoid any aggregation to occur during the coating process.

In Schmidt's patent, the nanoparticles are coated with silicone coupling agent such as aminopropyltrimethoxysilane. In this process, the aggregation of the iron oxide during the coating process is prevented by the large excess of coupling agent added: in the order of 80 weight % / Fe₂O₃. Because of this, a purification step is then necessary to get rid off the excess.

In both cases, as it is well known from the art, the functionality of the molecules used can be varied in order to allow the dispersion of the nanoparticles in different media.

However, the two different approaches are rather complex. For the Brotzman process, the preparation of a polymer is needed and the dispersion is diluted what can require a step of evaporation later on. In the second approach (Schmidt), a large excess of coupling agent is needed, what requires an uneasy and lengthy purification step.

Recent WO 02/45129 patent application describes the use of siloxane-based polymers for encapsulation of nanocrystalline particles.

The siloxane-based polymer may be obtained from precursors, some of them optionally containing phosphine or phosphate groups, and is then added to the nanocrystalline particles dispersion.

The thus treated dispersion is then incorporated in a crosslinkable resin.

There is no mention of any stabilizing effect due to the optional phosphine or phosphate groups.

US 4,994,429 discloses treating metal oxide/hydroxide particles with an organic acid material having a phosphorus containing acid group and an additional acid group selected from sulfonic acid group, carboxylic acid group, phosphonic and phosphinic acid groups.

After treatment, said additional acid group remains unreacted so that there is provided an active material comprising metal oxide/hydroxide particles having chemically bonded to reactive sites on the surface thereof a substantially monomolecular layer of organic acid molecules, each organic molecule comprising an unreacted acid group and a phosphorus containing acid group chemically bonded to the reactive site on the metal oxide/hydroxide particles.

Typical particle sizes are 1µm or more.

This document does not suggest treating non-stabilized metal oxide nanoparticles dispersions with a stabilizing compound comprising at least one phosphorus containing functional group in order to obtain metal oxide nanoparticles dispersions, in particular aqueous dispersions, which are stable for at least one week.

The article "Hybrid composite materials containing magnetic non oxide nanoparticles" Mat. Res. Soc. Symp. Proc. Vol. 628 © 2000 - Materials Research Society discloses treating a stable aqueous sol of maghemite (γ-Fe₂O₃) particles with a solution of phenylphosphonic acid, recovering the treated solid particles and dispersing the particles in an organic solvent, thus forming a stable organosol. It is further indicated that the complexation of the maghemite particles of the aqueous sol with the phenyl phosphonic acid causes the flocculation of the particles with deprotonation. It appears that the maghemite sol is prepared from a magnetite sol which has been previously obtained by alkalizing aqueous Fe II and Fe III ions.

The nanoparticles solutions are not obtained from a Fe₂O₃ powder.

Thus, a first object of the invention is to provide a method for preparing a stabilized metal oxide nanoparticles dispersion from nanoparticles powders or from non-stabilized liquid dispersions thereof, in particular an aqueous dispersion, which is simple, and in particular which does not need the preparation and use of a polymer nor the use of a large excess of a coupling agent and of a cumbersome purification step and which results in a dispersion which is stable for at least one week, at ambient temperature (25°C).

Another object of the invention is a stabilized metal oxide nanoparticles dispersion, in particular an aqueous dispersion, wherein the metal oxide nanoparticles have been treated with an effective amount of at least one stabilizing compound having at least one functional group selected from the group consisting of phosphoric and phosphonic acid and salts thereof, phosphine, phosphine oxide and phosphonium, whereby the dispersion is stable for at least one week.

A further object of the invention is an organic coating composition including a stabilized metal oxide nanoparticles dispersion as defined above, in particular for making a transparent coating.

### Summary of the invention

These and other objects of the invention are achieved by providing a method for preparing a stabilized dispersion of metal oxide nanoparticles, preferably an aqueous dispersion, which comprises treating the nanoparticles, with an effective amount of at least one stabilizing compound having at least one functional group selected from the group consisting of phosphoric and phosphonic acid and salts thereof, phosphine, phosphine oxide and phosphonium, whereby the dispersion is stable for at least one week.

Treatment with the stabilizing compound can be effected by adding and mixing the effective amount of stabilizing compound to a non stabilized dispersion of the nanoparticles, in a liquid medium, preferably an aqueous medium, or by dispersing the nanoparticles, preferably in powder form, in a liquid medium, preferably an aqueous medium, containing an effective amount of the stabilizing compound.

The present invention also concerns a stabilized dispersion of metal oxide nanoparticles, preferably an aqueous dispersion, wherein the nanoparticles are coated with at least one stabilizing compound having at least one functional group selected from the group consisting of phosphoric and phosphonic acid and salts thereof, phosphine, phosphine oxide and phosphonium, whereby the dispersion is stable for at least one week.

The present invention further concerns a coating composition, in particular an abrasion resistant coating for use in the optical field, comprising a stabilized dispersion as defined above.

The present invention still concerns a substrate, such as an optical lens, having at least one surface coated with a cured coating composition as defined above.

### Detailed description of the invention and preferred embodiments

The metal oxide nanoparticles of the present invention are metal oxide particles having a diameter less than 1 micrometer, preferably of 5 to 500 nm, more preferably of 5 to 100 nm and better of 5 to 50 nm.

Among metal oxides there may be cited SnO₂, Fe₂O₃, CeO₂, ZrO₂, Al₂O₃, Sb₂O₃ and mixtures thereof. The preferred metal oxides are Fe₂O₃, ZrO₂ and mixtures of SnO₂ and Sb₂O₃.

Preferably, the metal oxides are prepared by oxidation at elevated temperature.

The metal oxide nanoparticles are preferably in the form of a powder.

Typically, the amount of metal oxide nanoparticles present in the stabilized dispersions of the invention will range from 5 to 50%, preferably from 1 to 40% by weight.

The liquid medium in which the metal oxide nanoparticles are dispersed can be any known liquid or mixtures of liquids typically used for preparing metal oxide particles dispersions. It can be water, an organic solvent or a mixture thereof. Preferred organic solvents are alkanols such as methanol, ethanol. The preferred liquid medium is an aqueous medium such as water or a mixture of water and alkanol.

The stabilizing compounds of the present invention are compounds and mixtures of compounds having at least one functional group selected from the group consisting of phosphoric and phosphonic acid and salts thereof, phosphine, phosphine oxide and phosphonium.

Preferably, the stabilizing compounds of the invention are free of any additional acid group such as sulfonic acid groups and carboxylic acid groups.

Among these compounds, there may be cited phosphoric and phosphonic acids, salts of phosphoric and phosphonic acids, compounds of phosphoric and phosphonic acids and salts thereof, phosphine and phosphine compounds, phosphine oxide and phosphine oxide compounds, and phosphonium compounds.

As examples of stabilizing compounds usable in the invention, one can cites :
1,3-bis(diphenylphosphino)propane,
2-(diphenylphosphino)benzoic acid,
2-(diphenylphosphino)ethyl triethoxysilane,
4-(diphenylphosphino)benzoic acid,
diethylphosphatoethyltriethoxysilane,
diphenylphosphate,
diphenylphosphine oxide,
diphenylphosphonic acid,
metaphosphoric acid,
sodium polyphosphate,
tris(2, 4, 6-trimethoxyphenyl)phosphine,
tris(trimethylsylil)phosphate,
vinylphosphonic acid,
vinyltriphenylphosphonium bromide,
trimethyl 2-phosphonoacrylate,
diethoxyphosphinyl isocyanate,
triphenylphosphine.

Preferably, non polymeric stabilizing compounds are used, in particular no polysiloxane compound is used as a stabilizing agent.

Preferred stabilizing compounds are phosphoric acid (H₃PO₄), 2-(diphenylphosphino)benzoic acid, diethylphosphatoethyltriethoxysilane and mixtures thereof.

By an effective amount of stabilizing compound it is meant an amount sufficient to obtain stabilization of the dispersion.

Usually, the amount of stabilizing compound present in the dispersion will represent 2 to 30%, preferably 3 to 20% and more preferably 5 to 15% by weight based on the dry weight of metal oxide nanoparticles in the dispersion.

As already mentioned, the stabilized dispersion of the invention can be prepared in two different ways.

In a first approach, an unstabilized dispersion of metal oxide nanoparticles, obtained by dispersing a nanoparticles powder in a liquid medium, is provided and an effective amount of the stabilizing compound is added and mixed in the dispersion, whereby a stabilized metal oxide nanoparticle dispersion according to the invention is obtained. The unstabilized starting dispersion can be a commercial dispersion or can be prepared in a classical manner.

When using an aqueous liquid medium and a stabilizing compound being an alkoxysilane bearing a stabilizing group, it is important that the latter compound be added in a monomeric form.

Even if some polymerization may further occurs in situ, there is a primary reaction at the surface of the nanoparticles without beginning any substantial polycondensation of the alkoxysilanes.

In a second approach, there is first prepared a liquid composition by adding and mixing to a liquid medium such as water or an organic solvent an appropriate amount of at least one stabilizing compound and thereafter metal oxide nanoparticles, preferably in powder form, are added and mixed to the liquid composition, whereby there is obtained a stabilized metal oxide nanoparticles dispersion according to the invention.

The first approach is preferred.

Preferably, the liquid composition has an acidic pH.

In the method of the invention, the preparation of a polymer is not necessary, the media does not need to be too much diluted (30 w % dilution has been used) and no excess of coupling agent is necessary (weight % of organic products compared to the metal oxide is only from 5 to 15 w %). The chemical functionality of the stabilizing compounds used to treat the nanoparticles can be adjusted in order to be able to use those dispersions in different organic media. Furthermore, the dispersions of treated nanoparticles according to the invention are stable overtime (several months on a benchtop). In some cases, depending on the future use, it is necessary after the coating of the nanoparticles with the stabilizing compound to remove the larger size particles (superior to 30 nm diameter) by filtration, centrifugation, etc.

The dispersion of the present invention can be used in different media and in particular for formulating different organic coating compositions typically used for coating optical and/or ophthalmic substrates such as ophthalmic lenses.

The preferred organic coating compositions are those which contain as the main constituents an epoxy alkoxy silane and/or an alkyl alkoxy silane in the presence of a catalyst system or an hydrolyzate thereof.

Examples of such coating compositions are coating formulations with glycidoxypropyltrimethoxysilane, acryloxypropyltrimethoxysilane or diethylphosphatoethyltriethoxysilane in presence of a catalyst system, for example aluminum acetylacetonate or a combination aluminum acetylacetonate/cationic catalyst or a mixture itaconic acid/dicyandiamide.

The haze of transparent pieces coated from the coating formulations according to the invention is preferably less than 0.5%, and more preferably less than 0.2%.

The transparent pieces are preferably optical lenses.

In the following examples, the stability of the dispersion was evaluated by naked eye observation of the dispersion overtime (separation or not). The dispersion of the nanoparticles in different organic media was evaluated by looking at the stability of the dispersion as explained above and by realizing a coating from those dispersions and checking its transparency and level of haze.

### Examples 1-8 : With Nanoteck Antimony Tin Oxide^{®}

In a vial with 3 g of a 30 w % dispersion of uncoated Nanoteck Antimony Tin Oxide (designated by ATO) from Nanophase in water is added x g of H₃PO₄ 1 N in water, y g of 2-(diphenylphosphino)benzoic acid and z g of diethylphosphatoethyltriethoxysilane. The solution is mixed for 15mn either with a bath sonicator (185 W for 9.51 L), a high shear mixer or a magnetic stirrer. The dispersions of ATO are then ready to use. These dispersions are stable over several months as check visually, no separations of phase were observed and with the particle size analyzer (CHDF from MATEC), no changes of the particle size distribution were observed.

Such dispersions can be used to formulate coatings by adding 3.2 g of hydrolyzed glycidoxypropyltrimethoxysilane (obtained from 2.6 g of glycidoxypropyltrimethoxysilane and 0.6 g of HCl 0.1N stirred for at least 30 mn), then 6.2 g of H₂O, a catalyst (0.13 g itaconic acid and 0.04 g dicyandiamide) and a surfactant (0.13 g Silwet L7608^{®}). The final formulations are mixed for 15 mn. When a transparent, non-hazy plastic piece (ORMA^{®} plano lens made from diethyleneglycol diallylcarbonate and having a thickness of 2.5 mm at center) is spin-coated at 600 rpm for 8 seconds and then spin off at 1200 rpm (rotations per minute) for 10 seconds with such formulations, the coatings obtained are transparent and the level of haze is measured with a Hazegard (BYK Gardner Haze Gard Plus).

The following experimental conditions and the level of haze obtained are as noted in table I :

**Table (I)**

| Examples | x (g) | y (g) | z (g) | Mixing tool (1) | % of haze(2) |
|---|---|---|---|---|---|
| #1 | 0.5 | 0 | 0 | Bath Sonicator | 0.98% |
| #2 | 0.15 | 0.15 | 0 | Bath Sonicator | 0.89% |
| #3 | 0.15 | 0 | 0.15 | Bath Sonicator | 0.89% |
| #4 | 0 | 0.15 | 0.15 | Bath sonicator | 0.80% |
| #5 | 0.06 | 0.03 | 0.05 | Bath Sonicator | 0.57% |
| #6 | 0.06 | 0.03 | 0.05 | High Shear Mixer | 0.7% |
| #7 | 0.06 | 0.03 | 0.05 | Magnetic stirrer | 0.51% |
| #8 | 0 | 0 | 0.15 | Bath sonicator | 0.97% |
| Comparative #1 | 0 | 0 | 0 | Bath sonicator | 0.69% |

The coating formulations #1-8 were stable overtime (i.e. several months) contrary to coating formulation of comparative #1 where a separation of phase was observed after only 24 hours.
(1) Mixing tool for the preparation of coated ATO.
(2)% of haze of the coated plastic piece.

### Examples 9 and 10

Stabilized ATO dispersions were prepared as indicated for examples 1-8 but using the stabilizing compounds and conditions indicated in Tables (II) and (III).

Coating formulations of examples 9 and comparative 2 are done by adding 3 g of hydrolyzed diethylphosphatoethyltriethoxysilane (obtained from 2.4 g of diethylphosphatoethyltriethoxysilane and 0.6 g of HCl 0.1N stirred for at least 30 mn), then 5.9 g of H₂O, 0.1 g of itaconic acid, 0.04 g of dicyandiamide and surfactant Silwet L-7608^{®}. The final formulation is mixed for 15 mn. When a transparent, non-hazy plastic piece is spin-coated (600 rpm for 8 s, then spin off at 1200 rpm for 10 s) with such formulations, the coating obtained is transparent and the level of haze is measured with a Hazegard (BYK Gardner Haze Gard Plus).

The level of haze of the coatings of example 9 and comparative 2 are reported in table II below :

**Table(II)**

| Examples | x (g) | y (g) | z (g) | Mixing tool(1) | % of haze(2) |
|---|---|---|---|---|---|
| #9 | 0.07 | 0 | 0.07 | Bath Sonicator | 0.58% |
| Comparative #2 | 0 | 0 | 0 | Bath Sonicator | 1.28% |

Coating formulations of example 10 and comparative example 3 are obtained by adding 6 g of hydrolyzed 3-acryloxypropyltrimethoxysilane (obtained from 3.5 g of 3-acryloxypropyltrimethoxysilane, 0.8 g of HCl 0.1N and 1.7 g of PNP Acrosol). Then 5.9 g of water are added as well as an adequate catalytic system (0.1 g Irgacure^{™} 500 and 0.1 g aluminum acetylacetonate) and surfactant (Silwet L-7608^{®}). The final formulation is mixed for 15 mn. As before, transparent, non-hazy plastic piece of ORMA^{®} were spin-coated.

The following experimental conditions and the level of haze are reported in table (III) below :

**Table (III)**

| Examples | x (g) | y (g) | Z (g) | Mixing tool(1) | % of haze(2) |
|---|---|---|---|---|---|
| #10 | 0.07 | 0 | 0.07 | Bath sonicator | 10.5% |
| Comparative #3 | 0 | 0 | 0 | Bath sonicator | 13.1% (White solid on the lenses) |

### Example 11 and comparative example 4 : With Nanotek Antimony Tin Oxide^{®}: Efficiency of the centrifugation to remove larger nanoparticles

The experiments for example 11 and comparative example 4 were done in a similar way than respectively in example #5 for treated ATO and as comparative example 1 for the untreated one, except that, after the treatment with the stabilizing compound, the dispersion of ATO, in each case, was diluted to 5 weight % and centrifuged in 15 ml tubes at 6000 rpm for 20 mn. Then, the dispersion was concentrated to 30 weight % again. With such a treatment, the level of haze obtained for the same coating formulation , as described in the previous examples 1 to 8 is reported in table IV below:

**Table IV**

| Examples | Treatment of ATO | % of haze |
|---|---|---|
| #11 | Yes | 0.16% |
| Comparative #4 | No | 0.22% |

The centrifugation treatment did not have any adverse effect on the stability of the dispersion. If any effects were observed, it was to increase the stability overtime.

### Example 12 - comparative example 5 : With "Transparent Yellow oxide" (Fe₂O₃) 50 nm length and 10 nm width from Johnson Matthey ceramics Inc.

15 g of iron oxide powder were dispersed in 85 g of methanol with a high shear mixer. This solution was then centrifuged at 3000 rpm for 10 mn. The sumageant was collected and concentrated to reach 9 weight %. In a vial, was added 5.9 g of this dispersion and then x g of H₃PO₄ 1 N and y g of diethylphosphatoethyltriethoxysilane. The mixture was left for 15 mn in the bath sonicator. This dispersion was stable overtime (1 month) as a similar dispersion non-treated was not. This dispersion was then used in a coating formulation as previously described in the examples 1-8, except than in this case, methanol was added instead of water.

The result obtained were as follows :

| Examples | x (g) | y(g) | % of haze |
|---|---|---|---|
| #12 | 0.7 | 0.4 | 0.7% |
| Comparative #5 | 0 | 0 | 2.1 % |

The formulation #12 was stable overtime and no separation of phase was observed after 1 week. For the formulation of the comparative example 5, separation of phase occurred after 24 hours.

### Example 13 - comparative example 6 : With nano Zirconia (ZrO₂) particles from Jiangsu Xinxing Chemicals Group Corp.

20 g of zirconium oxide powder were dispersed in 200 g of ethanol with a high shear mixer. In a vial, was added 5.9 g of this dispersion and then x g of H₃PO₄ 1 N and y g of diethylphosphatoethyltriethoxysilane. The mixture was left for 15 mn in the bath sonicator. This dispersion was stable overtime (1 month) as a similar dispersion non-treated was not. This dispersion was then used in a coating formulation as previously described in the examples 1-8, except than in this case, no more solvent was added. The results obtained were as follow :

| Examples | x (g) | y (g) | % of haze |
|---|---|---|---|
| #13 | 0.6 | 0.1 | 5.3% |
| Comparative #6 | 0 | 0 | 5.6% |

In this latter case, the % of haze obtained is similar for the zirconia treated or not, but the treated zirconia dispersion (#13) was stable overtime. No separation of phase was observed after 1 week. For the formulation comparative #6, separation of phase occurred after 24 hours.

## Claims

1. A method of preparation of a stabilized dispersion of metal oxide particles having a size of less than one micrometer, comprising treating the particles with an effective amount of at least one stabilizing compound having at least one functional group selected from the group consisting of phosphoric and phosphonic acid and salts thereof, phosphine, phosphine oxide and phosphonium, whereby the dispersion is stable for at least one week.

2. The method of claim 1, wherein the stabilizing dispersion is an aqueous dispersion.

3. The method of claim 1 or 2, wherein the metal oxide is selected from SnO₂, Fe2O₃, CeO₂, ZrO₂, Al2O₃, Sb₂O₃ and mixtures thereof.

4. The method according to anyone of claims 1 to 3, wherein the metal oxide particles have a diameter of 5 to 500 nm.

5. The method of claim 4, wherein the metal oxide particle have a diameter of 5 to 500 nm.

6. The method of claim 4, wherein the metal oxide particles have a diameter of 5 to 50 nm.

7. The method according to anyone of claims 1 to 6, which comprises :
a. providing an unstabilized dispersion of metal oxide particles, obtained from nanoparticles, in a powder state, in a liquid medium ;
b. adding and mixing to the unstabilized dispersion the effective amount of stabilizing compound ; and
c. obtaining a substantially stabilized dispersion.

8. The method according to anyone of claims 1 to 6 comprising:
a. providing metal oxide particles having a size below one micrometer;
b. adding and mixing said metal oxide particles to a liquid composition comprising an effective amount of at least one stabilizing compound, and
c. obtaining a substantially stabilized dispersion.

9. The method of claim 8, wherein the liquid composition has an acidic pH.

10. The method of claim 8, wherein the stabilized dispersion or a portion thereof is centrifuged.

11. The method of claim 10, wherein the stabilized dispersion or a portion thereof is diluted before it is centrifuged.

12. The method of claim 8, wherein the metal oxide particles are provided in a powder state.

13. The method of claim 8, wherein the metal oxide particles are provided in an organic or aqueous solvent.

14. The method according to anyone of claims 1 to 13, wherein the metal oxide is a mixture of antimony oxide and tin oxide.

15. A stabilized dispersion comprising metal oxide particles having a diameter less than 1 µm dispersed in a liquid medium, wherein said metal oxide particles are coated with at least one stabilizing compound having at least one functional group selected from the group consisting of phosphoric and phosphonic acids and salts thereof, phosphine, phosphine oxide and phosphonium, whereby the dispersion is stable for at least one week.

16. The stabilized dispersion of claim 15 which is an aqueous dispersion.

17. An organic coating composition comprising a stabilized dispersion as in claim 15 or 16.

18. A transparent substrate coated with a cured layer of a coating composition as in claim 17.

19. The coated substrate of claim 18 having a haze of less that 0.5%.

20. The coated substrate of claim 18 having a haze of less than 0.2%.

## Patentansprüche

1. Verfahren zur Herstellung einer stabilisierten Dispersion von Metalloxidpartikeln die eine Größe kleiner als ein Mikrometer haben, umfassend die Behandlung der Partikel mit einer effektiven Menge von zumindest einer stabilisierenden Verbindung die zumindest eine funktionelle Gruppe ausgewählt aus der Gruppe bestehend aus Phosphor- und Phosphonsäure und deren Salze, Phosphane, Phosphanoxid und Phosphonium, wobei die Dispersion zumindest für eine Woche stabil ist.

2. Verfahren nach Anspruch 1, wobei die stabilisierte Dispersion eine wässrige Dispersion ist.

3. Verfahren nach Anspruch 1 oder 2, wobei das Metalloxid ausgewählt wird aus SnO₂, Fe₂O₃, CeO₂, ZrO₂, Al₂O₃, Sb₂O₃ und deren Mixturen.

4. Verfahren gemäß einem der Ansprüche 1 bis 3, wobei die Metalloxidpartikel einen Durchmesser von 5 bis 500 nm haben.

5. Verfahren nach Anspruch 4, wobei die Metalloxidpartikel einen Durchmesser von 5 bis 500 nm haben.

6. Verfahren nach Anspruch 4, wobei die Metalloxidpartikel einen Durchmesser von 5 bis 50 nm haben.

7. Verfahren gemäß einem der Ansprüche 1 bis 6, umfassend:
a. Bereitstellen einer unstabilisierten Dispersion von Metalloxidpartikeln, gewonnen von Nanopartikeln in einem Pulverzustand, in einem flüssigen Medium;
b. Zugeben und Mischen der effektiven Menge der stabilisierenden Verbindung zu der unstabilisierten Dispersion; und
c. Erlangung einer im Wesentlichen stabilisierten Dispersion.

8. Verfahren gemäß einem der Ansprüche 1 bis 6 umfassend:
a. Bereitstellen von Metalloxidpartikeln die eine Größe kleiner als ein Mikrometer haben;
b. Zugeben und Mischen der Metalloxidpartikeln zu einer flüssigen Zusammensetzung umfassend eine effektive Menge von zumindest einer stabilisierenden Verbindung, und
c. Erlangung einer im Wesentlichen stabilisierten Dispersion.

9. Verfahren nach Anspruch 8, wobei die flüssige Zusammensetzung einen acidischen pH-Wert hat.

10. Verfahren nach Anspruch 8, wobei die stabilisierte Dispersion oder eine Portion davon zentrifugiert wird.

11. Verfahren nach Anspruch 10, wobei die stabilisierte Dispersion oder eine Portion davon verdünnt wird bevor sie zentrifugiert wird.

12. Verfahren nach Anspruch 8, wobei die Metalloxidpartikel in einem Pulverzustand bereitgestellt werden.

13. Verfahren nach Anspruch 8, wobei die Metalloxidpartikel in einem organischen oder wässrigen Lösungsmittel bereitgestellt werden.

14. Verfahren gemäß einem der Ansprüche 1 bis 13, wobei das Metalloxid eine Mischung von Antimonoxid und Zinnoxid ist.

15. Stabilisierte Dispersion umfassend Metalloxidpartikel die einen Durchmesser von weniger als einen Mikrometer haben, aufgelöst in einem flüssigen Medium, wobei die Metalloxidpartikel beschichtet sind mit zumindest einer stabilisierenden Verbindung die zumindest eine funktionelle Gruppe ausgewählt aus der Gruppe bestehend aus Phosphor- und Phosphonsäuren und deren Salze, Phosphane, Phosphanoxid und Phosphonium hat, wobei die Dispersion zumindest für eine Woche stabil ist.

16. Stabilisierte Dispersion von Anspruch 15, welche eine wässrige Dispersion ist.

17. Organische Beschichtungszusammensetzung umfassend eine stabilisierte Dispersion wie in Anspruch 15 oder 16.

18. Transparentes Substrat beschichtet mit einer ausgehärteten Schicht einer Beschichtungszusammensetzung wie in Anspruch 17.

19. Beschichtetes Substrat von Anspruch 18, das eine Eintrübung von weniger als 0,5% hat.

20. Beschichtetes Substrat von Anspruch 18, das eine Eintrübung von weniger als 0,2% hat.

## Revendications

1. Procédé de préparation d'une dispersion stabilisée de particules d'oxyde métallique de taille inférieure à un micromètre, comprenant le traitement des particules à l'aide d'une quantité efficace d'au moins un composé stabilisant comportant au moins un groupe fonctionnel sélectionné dans le groupe constitué des groupes acide phosphorique et phosphonique et de leurs sels, phosphine, oxyde de phosphine et phosphonium, moyennant quoi la dispersion est stable pendant au moins une semaine.

2. Procédé selon la revendication 1, dans lequel la dispersion stabilisante est une dispersion aqueuse.

3. Procédé selon la revendication 1 ou 2, dans lequel l'oxyde métallique est sélectionné parmi SnO₂, Fe₂O₃, CeO₂, ZrO₂, Al₂O₃, Sb₂O₃, et des mélanges de ceux-ci.

4. Procédé selon l'une des revendications 1 à 3, dans lequel les particules d'oxyde métallique ont un diamètre allant de 5 à 500 nm.

5. Procédé selon la revendication 4, dans lequel les particules d'oxyde métallique ont un diamètre allant de 5 à 500 nm.

6. Procédé selon la revendication 4, dans lequel les particules d'oxyde métallique ont un diamètre allant de 5 à 50 nm.

7. Procédé selon l'une quelconque des revendications 1 à 6, comprenant les étapes suivantes :
a. fournir une dispersion non stabilisée de particules d'oxyde métallique, obtenue à partir de nanoparticules à l'état pulvérulent, dans un milieu liquide ;
b. ajouter à la dispersion non stabilisée la quantité efficace de composé stabilisant et mélanger ; puis
c. récupérer une dispersion sensiblement stabilisée.

8. Procédé selon l'une quelconque des revendications 1 à 6, comprenant les étapes suivantes :
a. fournir des particules d'oxyde métallique de taille inférieure à un micromètre ;
b. ajouter lesdites particules d'oxyde métallique à une composition liquide comprenant une quantité efficace d'au moins un composé stabilisant et mélanger ; puis
c. récupérer une dispersion sensiblement stabilisée.

9. Procédé selon la revendication 8, dans lequel la composition liquide présente un pH acide.

10. Procédé selon la revendication 8, dans lequel la dispersion stabilisée, ou une partie de celle-ci, est centrifugée.

11. Procédé selon la revendication 10, dans lequel la dispersion stabilisée, ou une partie de celle-ci, est diluée avant d'être centrifugée.

12. Procédé selon la revendication 8, dans lequel les particules d'oxyde métallique sont fournies sous forme pulvérulente.

13. Procédé selon la revendication 8, dans lequel les particules d'oxyde métallique sont fournies dans un solvant organique ou aqueux.

14. Procédé selon l'une quelconque des revendications 1 à 13, dans lequel l'oxyde de métal est un mélange d'oxyde d'antimoine et d'oxyde d'étain.

15. Dispersion stabilisée comprenant des particules d'oxyde métallique dont le diamètre est inférieur à 1 micromètre, dispersées dans un milieu liquide, lesdites particules d'oxyde métallique étant enrobées d'au moins un composé stabilisant comportant au moins un groupe fonctionnel sélectionné dans le groupe constitué des groupes acide phosphorique et phosphonique et de leurs sels, phosphine, oxyde de phosphine et phosphonium, moyennant quoi la dispersion est stable pendant au moins une semaine.

16. Dispersion stabilisée selon la revendication 15, qui est une dispersion aqueuse.

17. Composition de revêtement organique comprenant une dispersion stabilisée selon la revendication 15 ou 16.

18. Substrat transparent revêtu d'une couche durcie d'une composition de revêtement selon la revendication 17.

19. Substrat revêtu selon la revendication 18, ayant un voile (haze) inférieur à 0,5 %.

20. Substrat revêtu selon la revendication 18, ayant un voile (haze) inférieure à 0,2 %.
